(19) Europäisches Patentamt
European Patent Office
Office européen des brevets

(11) **EP 1 694 560 B1**

(12) **EUROPEAN PATENT SPECIFICATION**

(45) Date of publication and mention of the grant of the patent:
**08.12.2010 Bulletin 2010/49**

(51) Int Cl.:
*B64C 1/00* (2006.01)

(21) Application number: **04800851.0**

(86) International application number:
**PCT/US2004/037098**

(22) Date of filing: **05.11.2004**

(87) International publication number:
**WO 2005/047105 (26.05.2005 Gazette 2005/21)**

(54) **AREA RULING FOR SUPERSONIC VEHICLES**

FLÄCHENREGEL FÜR ÜBERSCHALLFAHRZEUGE

REPARTITION DES AIRES POUR VEHICULES SUPERSONIQUES

(84) Designated Contracting States:
**FR GB**

(30) Priority: **11.11.2003 US 706670**
**11.11.2003 US 706673**

(43) Date of publication of application:
**30.08.2006 Bulletin 2006/35**

(73) Proprietor: **Supersonic Aerospace International, LLC**
**Las Vegas, NV 89119 (US)**

(72) Inventors:
• **MORGENSTERN, John**
**Lancaster, CA 93536 (US)**
• **ARSLAN, Alan**
**Santa Clarita, CA 91387 (US)**
• **MOOSE, Garret**
**Palmdale, CA 93551 (US)**

(74) Representative: **Ertl, Nicholas Justin et al**
**Elkington and Fife LLP**
**Prospect House**
**8 Pembroke Road**
**Sevenoaks**
**Kent TN13 1XR (GB)**

(56) References cited:
WO-A-02/46038        DE-C1- 19 916 132
US-A- 4 390 150        US-A1- 2004 245 375
US-B2- 6 575 406

**Description**

## BACKGROUND OF THE INVENTION

The area rule is an important concept related to the drag on an aircraft or other body in transonic and supersonic flight. The area rule was developed in the early 1950s when production fighter designs began pushing ever closer to the sound barrier. Designers had found that the drag on these aircraft increased substantially when the planes traveled near Mach 1, a phenomenon known as the transonic drag rise. The increase in drag is due to the formation of shock waves over portions of the vehicle, which typically begins around Mach 0.8. The drag increase reaches a maximum near Mach 1. Because the drag results from the shock waves, this type of drag is referred to as wave drag.

Since the physics of supersonic flight were still largely a mystery to manufacturers, designers had no idea how to address this problem except to provide their aircraft with more powerful engines. Even though jet engine technology was rapidly advancing in those days, the first generation of jet-powered fighters was hampered by relatively low-thrust engines which limited them to subsonic flight. The US Air Force hoped to overcome this deficiency with its first dedicated supersonic fighter, the F-102 Delta Dagger.

Since the transonic drag rise was still not fully understood, the F-102's designers chose an engine they believed would provide enough thrust to reach a maximum speed of about Mach 1.2. However, initial flight tests of the YF-102 prototype indicated that the aircraft could not reach Mach 1. The aircraft's designers did not understand this lack of performance until a NACA researcher named Dr. Richard Whitcomb developed the area rule.

Whitcomb experimented with several different axisymmetric bodies and wing-body combinations in a transonic wind-tunnel. He discovered that the drag created on these shapes was directly related to the change in cross-sectional area of the vehicle from the nose to the tail. The shape itself was not as critical in the creation of drag, but the rate of change in that shape had the most significant effect. Stated differently, the wave drag is related to the second-derivative (or curvature) of the volume distribution of the vehicle.

To illustrate the point, Whitcomb's experimental models included (1) a simple cylindrical fuselage, (2) a cylindrical fuselage with wings attached, (3) a bulged fuselage, and (4) a "wasp-waisted" fuselage with wings. The addition of wings to the basic cylinder produced twice as much drag as the cylinder alone. Additionally, the drag rose by the same amount if a simple bulge were added to the cylinder, the bulge having equivalent volume to the wings. However, if the cross-sectional area of the fuselage was reduced over the region where the wings were attached, the total drag was about the same as that of the cylinder alone.

The conclusion of this research was that the drag on an aircraft could be drastically reduced by shaping the vehicle to create a smooth cross-sectional area distribution from the nose to the tail. The area rule dictates that the volume of the body should be reduced in the presence of a wing, tail surface, or other projection so that there are no discontinuities in the cross-sectional area distribution of the vehicle shape.

Whitcomb's findings are related to a more theoretical concept called the Sears-Haack body. This shape yields the lowest possible wave drag for a given length and volume. The variation in cross-sectional area distribution for a Sears-Haack body results in minimized wave drag when the curvature of the volume distribution is minimized. The closer the volume distribution of an aircraft or other high-speed vehicle comes to the ideal Sears-Haack body, the lower its wave drag will be.

The area rule has found greater application to subsonic aircraft, particularly commercial airliners since they cruise at the lower end of the transonic regime. A good example is the Boeing 747, known for its distinctive "hump." This hump, which houses the cockpit and upper passenger deck, increases the cross-sectional area distribution of the forward fuselage and has the effect of evening the volume distribution over the length of the aircraft. As a result, the 747 is able to cruise efficiently at a slightly higher speed than most other airliners since the increase in transonic wave drag is delayed. It is very difficult, however, to achieve realistic vehicle configurations that completely meet the ideal Sears-Haack body.

WO02/46038A discloses a superimposed bracing tail and fin connection for sonic boom reduction.

According to the invention, there is provided a method as claimed in claim 1.

## BRIEF DESCRIPTION OF THE DRAWINGS

Embodiments of the invention relating to both structure and method of operation, may best be understood by referring to the following description and accompanying drawings.

**FIG. 1A** is a graph showing the fuselage area distribution after Mach weighting and smoothing, and the second derivatives of the fuselage area distribution before and after Mach weighting and smoothing.
**FIG. 1B** is a flow diagram of an embodiment of a method for configuring the area ruled body shape for a supersonic aircraft.

**FIGS. 2A** through **2C** are side, front, and top views, respectively, of an embodiment of a supersonic aircraft that can be designed utilizing the Mach weighted area ruling process of **FIG. 1B.**

**FIG. 3A** is a top view of an embodiment of a rear portion of an aircraft including an area ruled vertical fin extending from a strake.

**FIG. 3B** shows the difference in cross-sectional area distribution for components of an example of an aircraft body versus the ideal Sears-Haack conceptual body shape for minimizing wave drag.

**FIG. 3C** is a top view of the tip of the area ruled vertical fin of **FIG. 3A** coupled to the inverted V-tail.

**FIG. 3D** is a top view of a cross-section of the root of the vertical fin of **FIG. 3A** mounted at the tip of the strake of **FIG. 3A.**

**FIG. 3E** is a side view of the rear portion of the aircraft with the vertical fin and strake of **FIG. 1A.**

**FIG. 3F** is a graph showing thickness profiles for an embodiment of the vertical fin and dorsal fuselage portion of **FIG. 1A.**

**FIG. 3G** is a diagram of the vertical fin reflected above the inverted V-tail of **FIG. 3A.**

**FIG. 4** is a block diagram of an embodiment of an aircraft design system that can be used to implement the Mach weighted area ruling process of **FIG. 1B.**

## DETAILED DESCRIPTION OF THE EMBODIMENTS

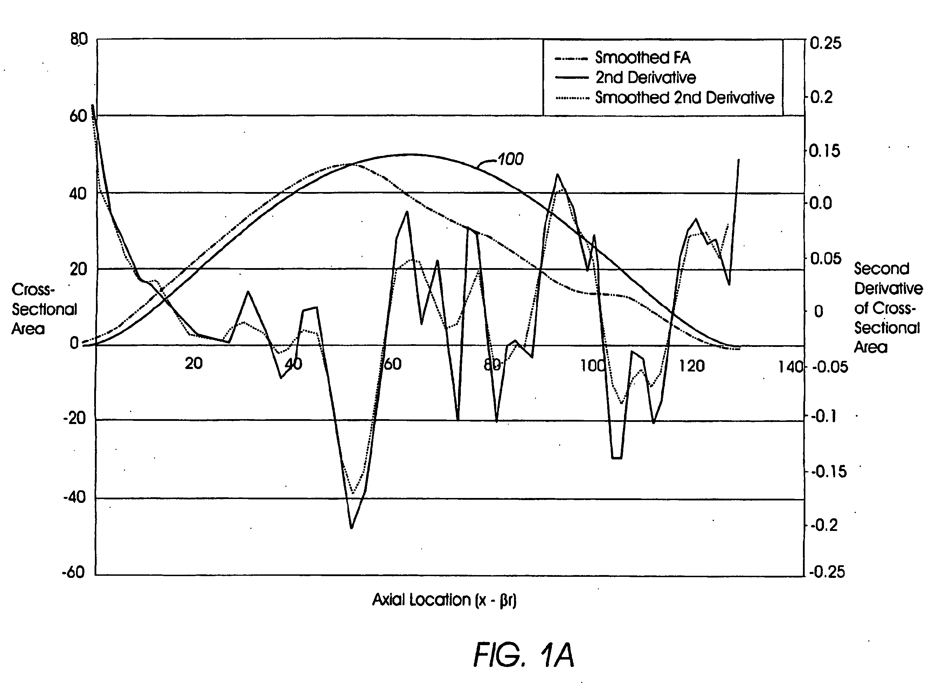

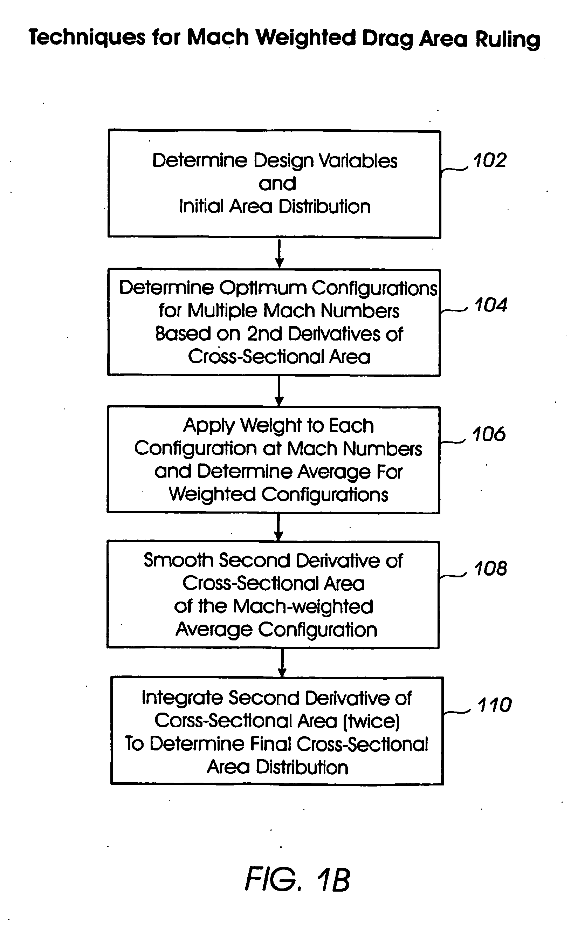

Referring to **FIGS. 1A** and **1B**, to minimize the wave drag due to change in cross-sectional area of a device such as an aircraft, the area of the device must follow a smooth bell curve shape known as a Sears-Haack curve **100** shown in **FIG. 1A.** The closer the cross-sectional area distribution of an aircraft is to the ideal Sears-Haack curve **100,** the lower the wave drag. In some embodiments disclosed herein, optimization methods can be used to determine a cross-sectional area distribution that minimizes wave drag to the extent possible given other constraints, such as minimizing sonic boom disturbance caused by a supersonic aircraft. A single aircraft configuration typically will not be optimal for all flight conditions.

In some situations, a designer is able to segregate portions of an aircraft's flight regime into distinct phases during which the aircraft can be reconfigured to achieve optimum performance for a given flight segment. For example, while it is desirable to reduce sonic boom disturbances over land, louder sonic booms can be tolerated over an ocean or large unpopulated land mass. Sonic boom constraints are easier to meet at slower speed, such as 1.5 Mach, versus 1.8 Mach for supersonic cruise.

**FIG. 1B** is a flow diagram of an embodiment of a method for configuring the area rule shape for minimum drag for devices such as a supersonic aircraft. Process **102** includes determining design variables (DVs) to use to optimize a specified figure of merit such as wave drag at a given Mach number. Each design variable can be a single value, or a set of values for one or more parameters. For example, in some embodiments, variables defining the shape of the fuselage such as cabin height and diameter, cockpit visibility, cockpit size, and nose bluntness, can be used to minimize the drag due to the fuselage. In other embodiments, additional variables such as parameters that define the camber, sweep angle, incidence angle, twist, and aspect ratio of the wing can be used in addition to the fuselage variables to determine an optimum configuration given constraints such as low sonic boom, high lift to drag ratio, and center of pressure position that balances with the aircraft's center of gravity.

Accordingly, process **102** includes determining Mach numbers and design variables to meet specified objectives and constraints. For example, a first configuration can be specified that meets sonic boom constraints during climb and cruise flight over land; another configuration can be specified that optimizes range during cruise flight over unpopulated areas with relaxed sonic boom constraints; and other specified configurations that optimize specified parameters during a particular flight segment at different Mach numbers.

Since the optimum shape of the aircraft is typically slightly different for each Mach number, process **104** includes determining optimum configurations for multiple Mach numbers. In one embodiment, configurations are determined at Mach 1.0, 1.1, 1.2, 1.3, 1.4, 1.5, 1.6, 1.7, 1.75 and 1.8. Additionally, the design approach can be configured to optimize the first or second derivative of the cross-sectional area distribution, which may converge more quickly to a solution than optimizing parameters representing the cross-sectional area distribution alone. The wave drag of a vehicle is given by the following equation:

$$D_w = (-\rho U^2/4\pi) \iint S''(x_1)\, S''(x_2)\, \ln|x_1 - x_2|\, dx_1 dx_2$$

Where $\rho$ is the free stream density; $U$ is the free stream velocity; $S''(x_1)$ and $S''(x_2)$ are the second derivatives of the area distribution obtained from the roll-averaged projections of Mach angle cuts with respect to the integration parameters; and $x_1$-$x_2$, which are the locations along the longitudinal axis of the aircraft. The term roll-averaged projections of Mach angle cuts refers to cross-sectional area determined along Mach angle lines, and at several different roll angles for the configuration. Using the rate of change of the curvature (i.e., second derivative of the area distribution) allows minimized drag to be achieved more directly for a configuration compared to generating different cross-sectional area distributions, computing their second derivatives, and determining the configuration with the minimum rate of change.

Process **104 (FIG. 1B)** can include adjusting various parameters associated with the design variables to determine optimum configurations for a device, for example, an aircraft based on goals and constraints, such as high lift to drag and minimized sonic boom disturbance at different Mach numbers. A single aircraft configuration typically will not be optimal for all flight conditions. The use of a variety of Mach numbers may also serve to smooth discrepancies between far-field linear theory and real fluid flow dynamics.

Process **104** can position the design variables along Mach angle lines, which vary according to the Mach number. Thus, optimum configurations for a device can vary between Mach numbers. In some embodiments, process **104** utilizes linear theory techniques to analyze shapes that meet constraints and are the closest to Sears-Haack equivalent body. Once a candidate configuration is identified, more complex non-linear computational fluid dynamic methods can be employed to further refine the configuration.

Process **106** includes weighting the second derivative of cross-sectional area distribution for each configuration at a particular Mach number with a factor, summing the weighted values, and taking the average of the weighted values to determine the final configuration. The weighting factors can be equal or based on any suitable constraint(s) or criteria, such as percent of typical flight profile, minimum drag, minimum sonic boom, inlet flow distortion, and/or the difference between thrust available and thrust required (referred to as pinch-point). For example, configurations at Mach 1.5 and 1.8 can be weighted more than the other configurations to optimize performance for low sonic boom cruise Mach 1.5 and high-speed cruise Mach 1.8. Configurations at other suitable Mach numbers and combinations of weighting factors can be utilized. Additionally, while the weighting factors can be applied to the second derivative of the cross-sectional area distribution, the weighting factors can alternatively be applied to the cross-sectional area distribution, or the first derivative of the cross-sectional area distribution.

Once the weighted average of the different Mach number configurations is determined, the weighted average configuration can be smoothed in process **108**. For example, **FIG. 1A** shows graphs of smoothed and unsmoothed weighted average curves for the second derivative of cross-sectional area distribution for an embodiment of an aircraft fuselage. The smoothed weighted average curve can be achieved using any suitable smoothing technique. For example, in some embodiments, the initial weighted average curve is filtered through the equivalent of a low-pass filter. In other embodiments, three-point smoothing is utilized, which includes taking the average of the values of points before and after a particular point, along with the value of the point itself. The smoothed weighted average curve shown in **FIG. 1A** is the result of applying three point averaging to the initial weighted curve.

When the first or second derivative of the cross-sectional area distribution is used to optimize a configuration, process **110** includes integrating the derivatives to determine the cross-sectional area distributions. **FIG. 1A** shows the weighted and unweighted average cross-sectional area distributions that result from the double integration of the weighted and unweighted average second derivatives of the cross-sectional area distributions, respectively.

The performance of the Mach-weighted configuration resulting from process **110** is analyzed in process **112**. In the early stages of a new aircraft design, several configurations may be analyzed to determine the best tradeoff between often-competing goals. Thus, in some embodiments, process **112** can perform linear analysis to evaluate multiple candidates. In the later design stages, however, process **112** can utilize non-linear techniques, which are computationally much more intensive, but provide more accurate results than linear techniques.

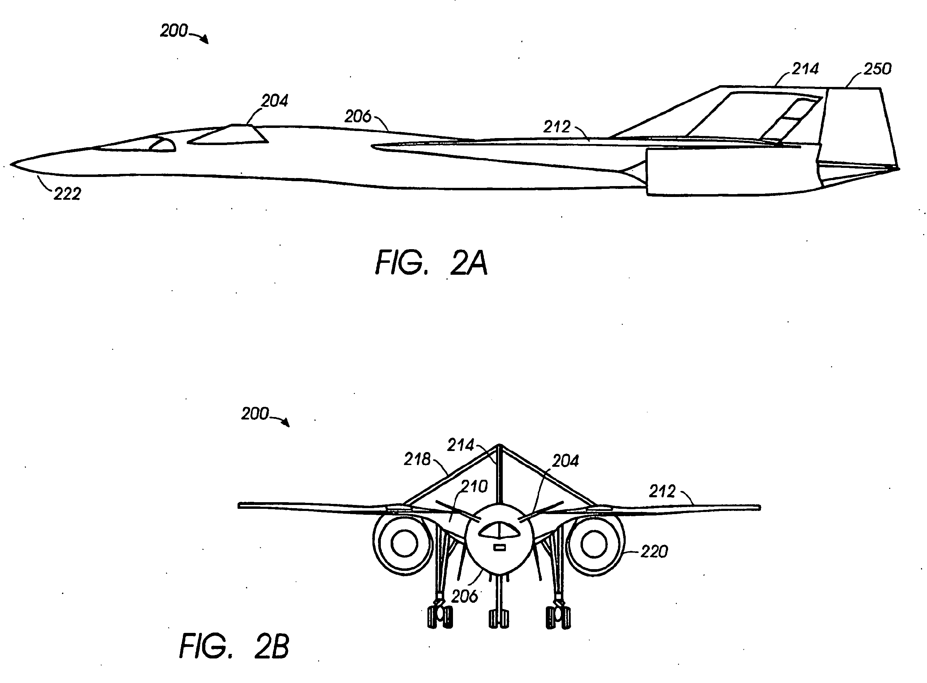

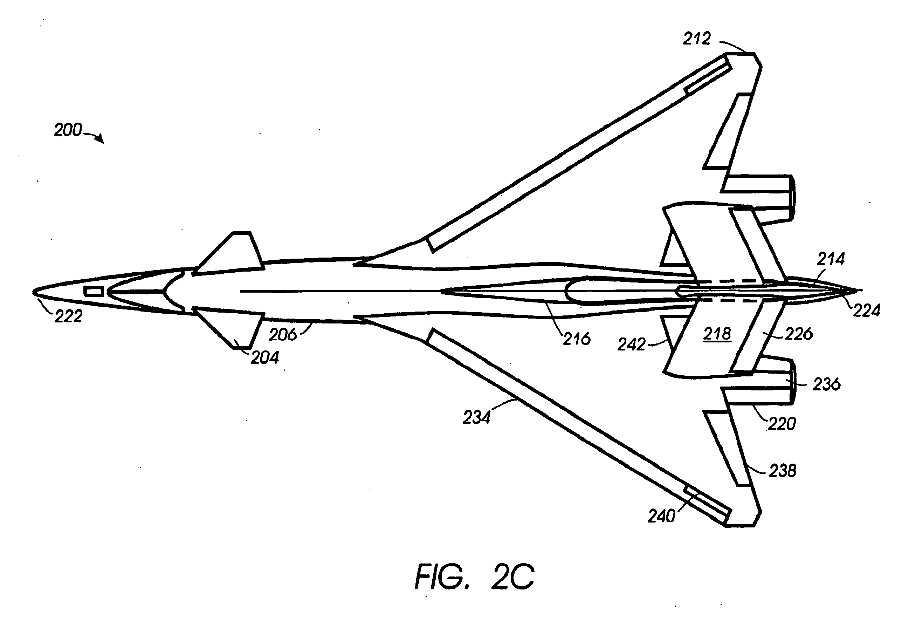

**FIGS. 2A** through **2C** show side, front, and top views, respectively, of an example of supersonic aircraft **200** that can be designed using the Mach weighting, averaging, and smoothing techniques shown in **FIG. 1B**. Design variables can be located at suitable locations, depending on the objectives and constraints being used to optimize the configuration and may include every point utilized in the discrete far-field wave drag integral along fuselage **206** at the desired level granularity.

To shape vertical fin **214,** strake **216,** and inverted V-tail **218** according to the area rule for minimum drag, parameters such as thickness, height, and width can be used to minimize cross-sectional area, as well as the second derivative of cross-sectional area distribution. The design variables for determining an optimum area distribution typically include the area of fuselage **206,** canard **204,** wing **212,** nacelles **220,** and V-tail **218** along Mach angle lines **202.** Fuselage **206,** vertical fin **214,** and strake **216** can be configured with areas of reduced cross-sectional areas, also referred to as "waisted" areas, in the vicinity of wings **212,** nacelles **220,** and V-tail **218** to help meet the ideal Sears-Haack curve **100 (FIG. 1A).**

Wings **212** includes gull dihedral portions **210** with inboard dihedral primarily at the trailing edges while maintaining straight inboard wing sections forward of the trailing edge dihedral. Gull dihedral portions **210** are configured to extend lifting length and reduce sonic boom effects. Gull dihedral portions **210** can be configured by adjusting the twist and camber of wings **212** to produce low-boom and low induced drag.

In some examples, aircraft **200** has twin non-afterburning turbofan engines (not shown) set below and behind wings **212.** The non-afterburning turbofan engines operate behind fixed-geometry axisymmetric external compression inlets. Nacelles **220** enclose the engines and are coupled to the lower surface of wings **212.**

Inverted V-tail **218** generates additional aft lift to improve aerodynamics and reduce sonic boom disturbances during cruise flight conditions, as well as providing structural support for wings **212** and engine nacelles **220.** Supersonic aircraft **200** creates a shaped pressure wave caused by overpressure at nose **222** and underpressure at tail **224.** Pressure rises rapidly at nose **222,** declines to an underpressure condition at tail **224,** and then returns to ambient pressure.

The shape of supersonic aircraft **200,** including aspects of wing **212,** V-tail **218,** and a reflexed airfoil portion (not shown) integrated with engine nacelle **220,** are adapted according to sonic boom signature and supersonic cruise drag considerations. In some embodiments, a portion of nose **222** can be blunted to create a pressure spike ahead of the aircraft forward shock, which raises local temperature and sound velocity, thereby extending the forward shock and slowing the pressure rise. Wings **212** can have a sharply swept delta configuration that reduces peak overpressure by spreading wing lift along the length of aircraft **200.** Wings **212** can also include reduced leading and trailing edge sweeps. Inverted V-tail control surfaces, termed ruddervators **226,** adjust aircraft longitudinal lift distribution throughout the flight envelope to maintain a low boom, low drag trim condition.

In some embodiments, the leading edges of wings **212** have a substantially straight geometry to accommodate Krueger flaps **234** that extend substantially the full length of wings **212.** Wings **212** integrate with nacelles **220** and diverters **236,** and follow the fuselage contour with a substantially normal intersection to reduce interference drag. An inboard wing flap hinge line is fully contained within the wing contour with upper and lower wing surfaces configured as planar as possible to facilitate aerodynamic performance.

Gull dihedral portions **210** raise the engines to increase available tip-back angle and reduce thrust-induced pitching moments. Gull dihedral portions **210** lower fuselage **206** to reduce the cabin door height above the ground and reduce entry stair length. Fuselage **206** sets a low aircraft center of gravity, reducing tip-over angle and promoting ground stability. Gull dihedral portions **210** form partial shrouds around nacelles **220,** enhancing favorable interaction between nacelles **220** and wings **212.** In addition, gull dihedral portions **210** enhance the aircraft low-boom signature by vertically staggering the longitudinal lift distribution of wings **212.**

In some embodiments, supersonic aircraft **200** can include canards **204** on both sides of fuselage **206** that operate primarily as longitudinal power control devices, particularly during takeoff and high-speed flight. Canards **204** also fine tune the aircraft longitudinal trim condition and augment rudder operation by supplying yaw control power when canards **204** are deflected differentially.

Supersonic aircraft **200** can further include segmented ailerons **238** that supply roll control power and automatic wing camber control to improve lift and drag conditions through the flight envelope. High-speed spoilers **240** supplement aileron roll power at transonic and supersonic speeds where Mach number and aeroelastic effects reduce aileron effectiveness. Supersonic aircraft **200** has a high lift system including inboard trailing edge flaps **242** and full-wingspan leading edge Krueger flaps **234.**

Canards **204** and symmetric defections of the ruddervators **226** control pitch power. Rudder **250** controls yaw. Ailerons **238** and high speed spoilers **240** control roll at both subsonic and supersonic speeds. In an illustrative embodiment, trailing edge (TE) flaps **242** are deployed 20° down to generate additional lift during landing. TE flap deployment reduces angle-of-attack by approximately 2° during landing. During a subsequent segment of the climb, the TE flaps **242** can be extended up to 30° to improve the lift-to-drag ratio for better performance.

Leading edge (LE) Krueger flaps **234** can be extended up to 130° for low speed operations including takeoff, approach and landing. The LE Krueger flaps **234** can improve lift-to-drag ratio by a factor of 1.5, resulting in better climb performance that facilitates second-segment climb in case of engine malfunction.

Some of the control surfaces on supersonic aircraft **200** can perform multiple functions. For example, ruddervators **226** enable continued operation and landing following single actuator failure or jammed control surface. Differential deflection of canards **204** can generate a yawing moment to counter a jammed rudder **250.** Ailerons **238** and ruddervators **226** include multiple surfaces, increasing fault tolerant capability and supplying redundant control elements for improved reliability.

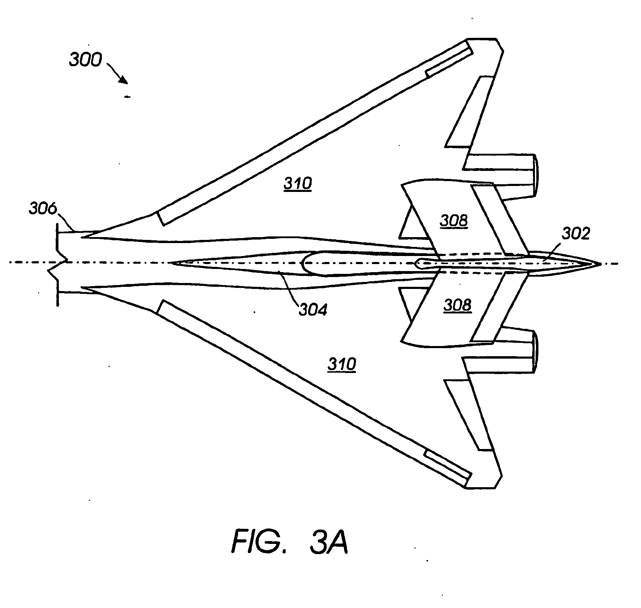

Referring to **FIGS. 3A** through **3D, FIG. 3A** is a top view of an embodiment of a rear portion of aircraft **300** including vertical fin **302** extending from strake **304,** rear fuselage portion **306,** inverted V-tail **308,** and wings **310.** While both the tip and root of vertical fin **302** are shown shaped according to area ruling concepts, in some embodiments, either the tip or root, but not both, of vertical fin **302** can be area ruled. Additionally, the area ruled shape of vertical fin **302** and strake **304** can include more than one "wasp-waist," or reduced cross-sectional areas. Applying area ruling to aircraft **300,** including vertical fin **302** and strake **304,** helps reduce wave drag by reducing the rate of change in the aircraft's overall cross-sectional area distribution, and minimizing the maximum cross-sectional area distribution of the aircraft. Additionally, reducing the volume in the fuselage **306** in the vicinity of vertical fin **302,** strake **304,** inverted V-tail **308,** and wings **310** facilitates application of area ruling as well as reducing sonic boom disturbance.

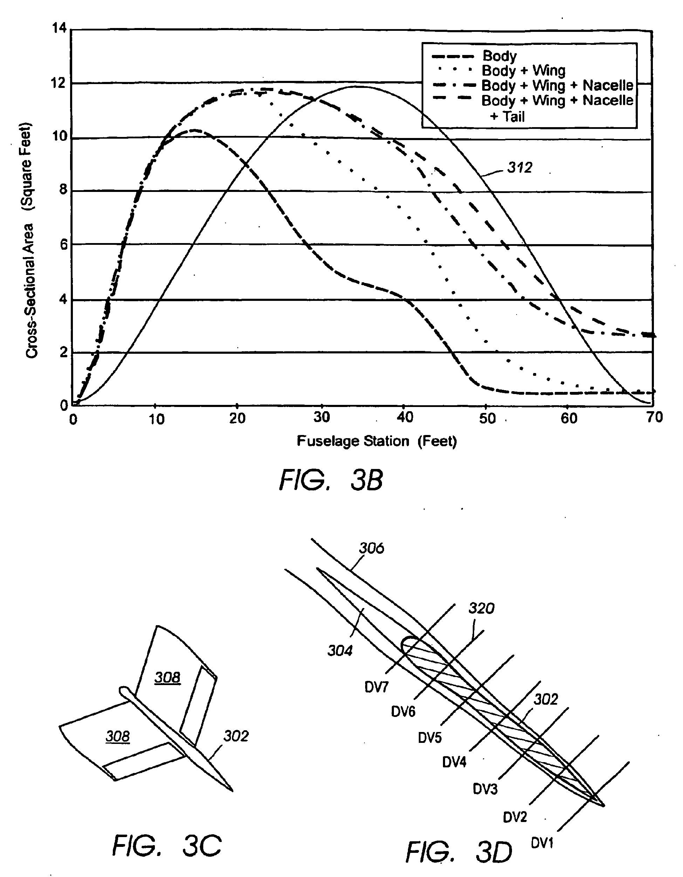

To reduce the wave drag due to change in cross-sectional area distribution, the area distribution must follow the smooth Sears-Haack curve **312** shown in **FIG. 3B. FIG. 3B** also shows the difference in cross-sectional area distribution for components of an example of an aircraft body versus the Sears-Haack conceptual body shape. The closer the cross-sectional area distribution of an aircraft comes to the ideal Sears-Haack curve **312,** the lower the wave drag. A smooth overall vehicle cross-sectional area distribution in the vicinity of wing **310,** vertical fin **302** and inverted V-tail 308 can be more significant in reducing wave drag than a smooth fuselage area distribution.

**FIG. 3C** is a top view of the tip of vertical fin **302** of **FIG. 3A** coupled to inverted V-tail **308.** The area ruling of the tip of vertical fin **302** reduces the cross-sectional area of vertical fin **302** in the vicinity of inverted V-tail **308,** as well as the rate of change of the cross-sectional area distribution. In some embodiments, the area ruling is only applied to vertical fin **302** at the juncture of inverted V-tail **308.** In other embodiments, the area ruling can extend all or part of the distance between the root and the tip of vertical fin **302.**

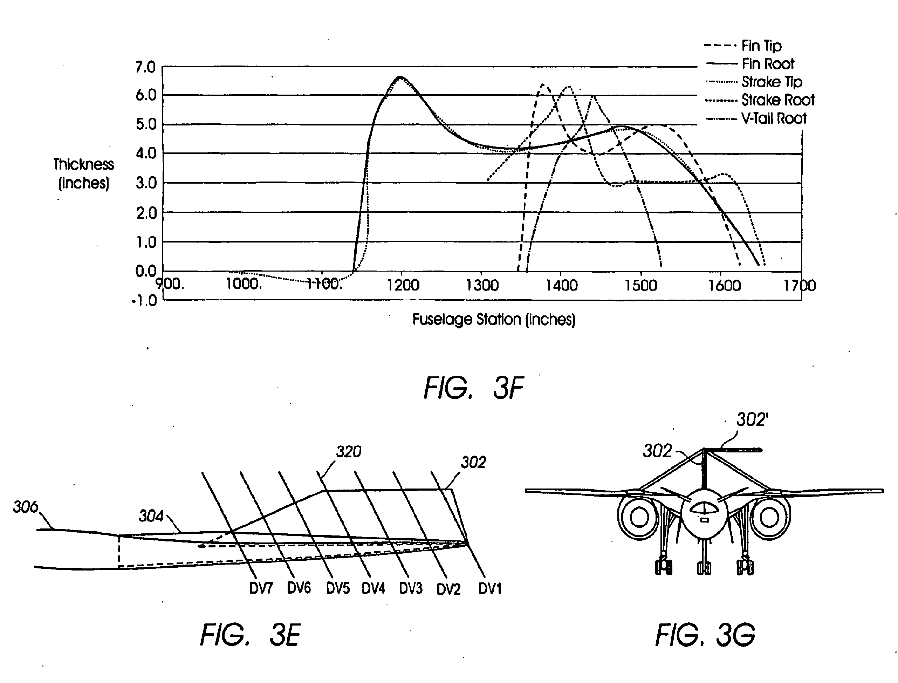

**FIG. 3D** is a top view of the root of vertical fin **302** at a juncture with the tip of strake **304** of **FIG. 3A. FIG. 3E** is a side view of vertical fin **302** and strake **304** of **FIG. 3A** with respect to fuselage portion **306.** Strake **304** includes an upper portion above fuselage **306** that is exposed to the airstream, and a lower portion that is mounted within fuselage **306** that carries loads from vertical fin **302** and inverted V-tail **308.** Strake **304** improves aircraft fuselage stiffness, enables a desired reduction in fuselage volume, and compensates for any reduction in stiffness that results from the reduced area fuselage.

In some embodiments, both the root of vertical fin **302** and the upper portion of strake **304** are shaped to reduce the cross-sectional area of aircraft **300,** as well as the rate of change of the cross-sectional area distribution. In other embodiments, either vertical fin **302** or the upper portion of strake **304** is configured to help aircraft **300** achieve a shape that corresponds as closely to Sears-Haack curve **312 (FIG. 3B)** as possible.

Referring to **FIGS. 3A** and **3F, FIG. 3F** is a graph of thickness profiles for embodiments of tip and root cross-sections of vertical fin **302,** strake **304,** and the root of V-tail **308** at the juncture with the tip of vertical fin **302,** along stations of fuselage **306.** The thickness profile of the root of vertical fin **302** corresponds approximately to the shape of the tip of strake **304.** Note that the thickness profiles represent the thickness of the entire component.

**FIGS. 3D** and **3E** show an example of locations of design variables **DV1-DV7** that can be used to determine an optimum configuration for vertical fin **302** and strake **304.** In some embodiments, design variables **DV1-DV7** are utilized to perform area rule optimization on the shape of vertical fin **302** and/or strake **304.** The optimization can be performed on individual components, or combinations of vertical fin **302,** strake **304,** fuselage **306,** inverted V-tail **308,** and/or wing **310.** Additional design variables can be used in certain analysis methods, such as computational fluid dynamics (CFD), to simultaneously determine optimum configurations for a combination of vertical fin **302,** strake **304,** fuselage **306,** inverted V-tail **308,** and wing **310.** Further, any suitable number and location of design variables can be used to configure vertical fin **302,** strake **304,** and inverted V-tail **308,** depending on the geometry of a specific configuration. In some instances, constraints are specified to maintain maximum possible thickness of vertical fin **302** for structural support considerations while still achieving minimum drag and zero closure angle at the trailing edge of vertical fin **302.**

The design variables are typically optimized along Mach angle lines **320,** which vary according to the Mach number. Thus, an optimum configuration for the components such as vertical fin **302,** strake **304,** and inverted V-tail **308** can vary between Mach numbers.

To shape vertical fin **302,** strake **304,** and inverted V-tail **308** for minimum drag, parameters such as thickness, height, and width can be used to minimize cross-sectional area, as well as the change (first derivative) of cross-sectional area distribution, and rate of change (second derivative) of cross-sectional area distribution. A combination of thicknesses and n-order derivatives can also be used as design variables in orthogonal functions such as Fourier series and Legendre polynomial functions, as well as non-orthogonal functions such as Taylor series. Use of first and second order derivatives as design variables typically achieves smoother shapes than cross-sectional area and thickness alone.

As an example, the following Table 1 shows examples of first derivative variables and equations that can be specified for the design variables:

TABLE 1

| Design Variable | Axial Location | First Derivative of thickness | thickness |
|---|---|---|---|
| DV1 | $X_1$ | $t'_1$ | 0 |
| DV2 | $X_2$ | $t'_2$ | $t_1 = c_1 * t'_1 * (X_2 - X_1)$ |
| ... | ... | .... | ... |
| DV(n-1) | $X_{n-1}$ | $t'_1$ | $t_{n-1} = t_{n-2} + C_{n-1} * t'_{n-1} * (X_{n-1} - X_{n-2})$ |
| DVN | $X_n$ | $t'_1$ | $t_n = t_{n-1} + c_n * t'_n * (X_n - X_{n-1})$ |

The coefficients $c_n$ through $c_n$ can be adjusted to match the maximum thickness constraints as well as achieve trailing

edge thickness, $t_n$, of zero.

Referring again to **FIG. 1B,** in some embodiments, process **104** utilizes linear theory techniques to analyze shapes that minimize the first and second rates of change of the cross-sectional area distribution, thickness, to optimize the configuration of an aircraft for low drag. Another consideration in determining the shape of vertical fin **102** is that structural constraints generally require a minimum thickness between the sides of vertical fin **102,** typically over a specified percentage of the distance from the leading edge to the trailing edge of the vertical fin **102.** The term "chord", denoted by **"$c$",** refers to a straight line from the leading edge to the trailing edge of an airfoil. The structural requirements can be specified as a minimum closure angle $\theta$ at the trailing edge of vertical fin **302** that will result in the desired thickness **$d$** at the specified distance along chord **$c$,** such as 80 percent of the chord (0.8$c$).

An example of a suitable linear theory software program than can be used in process **104** is AWAVE, which was developed by NASA Langley. AWAVE determines fuselage cross sections which yield minimum wave drag by enforcing the supersonic area rule. Three-dimensional aircraft component definitions, such as wing, fuselage, nacelle and empennage are input into the program. Then, the far-field wave drag of the configuration is analyzed based on the equivalent bodies of those components, producing an optimum fuselage cross section distribution along its axis for design Mach numbers larger than 1.0. Once candidate configurations are identified, more complex non-linear computational fluid dynamic methods can be employed to further refine the configurations.

Process **104** can also utilize the Method of Reflections of linear fluid flow theory to analyze the drag characteristics of inverted V-tail **308** and vertical fin **302.** In applying the Method of Reflections, a virtual image of vertical fin **302** is "reflected" on the other side of inverted V-tail **308** as shown in **FIG. 3G** by reflected fin **302'.** The Method of Reflections is used to model flow trapped in a channel formed between vertical fin **302** and inverted V-tail.**308** by simulating a symmetry boundary condition in which a degree of freedom is removed from the flowfield. In some embodiments, the aircraft configuration is optimized for Mach numbers that are close to transonic conditions in order to avoid choking the flow in the channel formed between vertical fin **302** and inverted V-tail **308.**

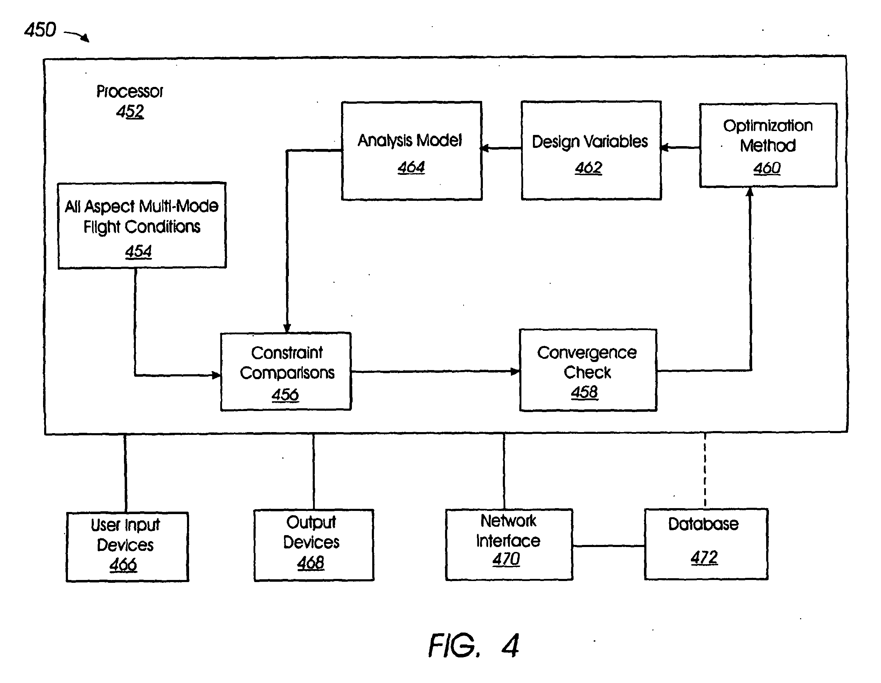

Referring to **FIGS. 1B** and **4, FIG. 4** is a block diagram of an embodiment of an aircraft design system **450** that implements at least some of functions of processes **102** through **112.**

Logic instructions are executed in computer processor **452** for various functions such as input all aspect, multi-point goals and constraints instructions **454;** constraint comparison instructions **456;** convergence check instructions **458;** optimization method **460;** set design variables instructions; and analysis model **464.** Note that in other embodiments, additional sets of instructions can be performed by computer processor **452** in addition to, or instead of, instructions shown in **FIG. 4.**

Input all aspect, multi-point goals and constraints instructions **454** receives input from users regarding the different flight modes at which the aircraft configuration will be optimized. For example, modes such as takeoff, climb, low sonic boom mode at Mach 1.5, and high speed cruise mode at Mach 1.8 can be entered for analysis. The results of system **450** can include different settings for control surfaces and other reconfigurable aspects of the aircraft, as well as optimize the shape of fixed components such as wing camber; fuselage shape; wing, strake, and vertical fin shape; and engine nacelle position and shape, among others. In addition to various flight modes, the user may also enter different aspect angles at which to analyze and optimize the aircraft's configuration. For example, while a particular aircraft configuration may meet low sonic boom goals directly under the aircraft during flight, the sonic boom disturbance generated to the sides of the aircraft may be objectionable. Therefore, the user can enter different flight modes as well as the distance/angle from centerline at which the sonic boom disturbance will be analyzed to determine the aircraft's configuration during various flight modes.

Constraint comparison instructions **456** receives input from all aspect, multi-point goals and constraints instructions **454** and analysis model **464.** The geometry and performance of one or more configurations is compared to the constraints, such as lift to drag ratio, sonic boom, and geometry constraints. Convergence check instructions **458** receive the constraint comparisons and determine whether a solution has converged to meet all of the desired constraints. If all the constraints have not been met, optimization method **460** is invoked.

Optimization method **460** proceeds through iterative changes to the geometry and perturbations that, for example, optimize a defined cost function (e.g. drag) while satisfying geometric and aerodynamic constraints (e.g. fuel volume, cruise lift coefficient). Configurations can be optimized for single or multiple conditions. Target pressure distributions can be specified for inverse design, or as a constraint during optimization of other performance drivers. Any suitable optimization method can be utilized, including one or a combination of methods.

Set design variables instructions **462** allow the user to specify locations on the aircraft's geometry, parameters at each location, and perturbation values for each parameter. **The** perturbations values can be single values, or a range of values, for each parameter.

Analysis model **464** performs linear and/or computational fluid analysis (CFD) on candidate configurations and provides performance results to constraint comparison instructions **456.** Any suitable analysis program or set of programs can be utilized. The complete iterative design process for performance optimization, geometry shaping and CFD analysis may be automated. An example of a suitable linear theory software program than can be used for Analysis Model **464** is AWAVE, which was developed by Boeing Aircraft Company and NASA Langley. AWAVE determines fuselage cross sections which yield minimum wave drag by enforcing the supersonic area rule. Three-dimensional aircraft component definitions, such as wing, fuselage, nacelle and empennage are input into the program. Then, the far-field wave drag of the configuration is analyzed based on the equivalent bodies of those components, producing an optimum fuselage cross section distribution along its axis for design Mach numbers larger than 1.0. Once candidate configurations are identified, more complex non-linear computational fluid dynamic methods can be employed to further refine the configurations.

With respect to area ruling, an optimum shape at one Mach number generally will have more "waist" than shapes optimized for a higher Mach number. Analysis Model **464** includes weighting each configuration with a factor, summing the weighted values, and taking the average of the weighted values to configure an aircraft to operate efficiently over expected flight conditions, such as takeoff, climb, low boom climb and cruise, high speed cruise, and landing. The weighting factors can be based on any suitable constraint(s) or criteria, such as percent of typical flight profile, minimum drag, or minimum sonic boom, for example. In one embodiment, configurations are determined at Mach 1.2, 1.3, and 1.8. Configurations at other suitable Mach numbers and combination of weighting factors can be utilized.

The logic instructions can be implemented as software programs and distributed over an information network or suitable computer-readable media as a software application program that can be installed on a personal computer, a centralized server, or other suitable computer system. The logic instructions can also be implemented in hardware, firmware, and/or a combination of hardware, firmware and software. One or more user input devices **466** can be provided, such as a keyboard, mouse, light pen, or a component such as a disk drive that can read data input files from a disk, to enable a designer to enter suitable constraints and design parameters. One or more output devices **468** such as a display device, printer, plotter, or other suitable output device can be coupled to receive information from processor **452.** A user interface can also be included that provides instructions for using system **450,** possible design parameters that can be varied, as well as assistance in interpreting the results. The results can be formatted and output for use in other design systems, such as computer-aided design and drawing systems via network interface **470,** to easily share the results of the design effort. Processor **452** can be configured to access a database **472** either directly or via network interface **470** for mass data storage and retrieval.

In addition to providing systems and methods for configuring aircraft with area ruling to minimize drag, system **450** and processes **102** through **112 (FIG. 1B)** can be adapted to apply area ruling to the shape of any type of apparatus that includes surfaces subject to some sort of flow. For example, aquatic vehicles used on the surface and/or underneath water can be analyzed and configured to minimize cross-sectional area as well as first and second order rates of change in cross sectional area distribution curves to reduce wave drag. Additionally, embodiments of the systems and methods disclosed herein can be configured to apply to T-tails as well as inverted V-tails on aircraft and other vehicles.

While the present disclosure describes various embodiments, these embodiments are to be understood as illustrative and do not limit the claim scope. Many variations, modifications, additions and improvements of the described embodiments are possible. For example, those having ordinary skill in the art will readily implement the processes necessary to provide the structures and methods disclosed herein. Variations and modifications of the embodiments disclosed herein may also be made while remaining within the scope of the following claims. The functionality and combinations of functionality of the individual modules can be any appropriate functionality. In the claims, unless otherwise indicated the article "a" is to refer to "one or more than one".

## Claims

1.   A method for incorporating area ruled surfaces in a supersonic aircraft design, the method comprising:

configuring the vertical fin with a "waisted" area to optimize the cross-sectional area distribution of the aircraft in the vicinity of the vertical fin for low drag performance; and
reflecting a virtual image of the vertical fin about an inverted V-tail or T-tail stabilizing surface coupled to the vertical fin to simulate a symmetry boundary condition in which a degree of freedom is removed from the flowfield to avoid choked flow between the vertical fin and the stabilizing surface when determining the configuration of the waisted area of the vertical fin.

2.   The method according to Claim 1 wherein the reflecting is about an inverted V-tail.

3.   The method according to Claim 1 further comprising:

determining the "waisted" area for the vertical fin at the juncture of a strake.

4. The method according to Claim 3 further comprising:

   configuring the strake with a "waisted" area.

5. The method according to Claim 1 further comprising:

   determining a first optimum configuration for the "waisted" area of the vertical fin and aircraft fuselage at a first Mach number;
   determining a second optimum configuration for the "waisted" area of the vertical fin and aircraft fuselage at a second Mach number;
   weighting the first and second optimal configurations with weighting factors to form weighted configurations; and averaging the weighted configurations to determine a final configuration.

6. The method according to Claim 5 further comprising:

   determining weighting factors for the first and second optimum configurations based on a percentage of time the aircraft is expected to fly at each Mach number during typical flight profiles.

7. The method according to Claim 5 further comprising:

   determining weighting factors for the first and second Mach numbers based on at least one of the group of: minimized drag and minimized sonic boom disturbance.

8. The method according to Claim 1 further comprising:

   minimizing the thickness of the vertical fin subject to a constraint of a minimum closure angle at the trailing edge of the vertical fin.

9. The method according to Claim 1 further comprising:

   optimizing the cross-sectional area distribution along Mach angle lines.

10. The method according to Claim 8, further comprising:

    determining weighting coefficients for design variables to maintain thickness constraints for the vertical fin.

11. The method according to Claim 10, further comprising:

    determining the weighting coefficients for nth order derivatives using orthogonal functions to represent respective thickness constraints.

12. The method according to Claim 5, wherein the reflecting is about an inverted V-tail, the method further comprising:

    determining weighting factors based on avoiding choked flow conditions between the vertical fin and the stabilizing surface.


**Patentansprüche**

1. Verfahren zum Integrieren von flächengeregelten Oberflächen in eine Überschallflugzeugkonstruktion, wobei das Verfahren Folgendes beinhaltet:

   Konfigurieren des Seitenleitwerks mit einem "taillierten" Bereich, um die Querschnittsflächenverteilung des Flugzeugs in der Nähe des Seitenleitwerks für geringen Widerstand zu optimieren; und
   Reflektieren eines virtuellen Bildes des Seitenleitwerks um eine umgekehrte V-Leitwerk- oder T-Leitwerk-Stabilisierungsfläche, die mit dem Seitenleitwerk gekoppelt ist, um eine Symmetriegrenzbedingung zu simulieren, bei der ein Freiheitsgrad vom Strömungsfeld entfernt ist, um beim Bestimmen der Konfiguration des taillierten Bereichs des Seitenleitwerks eine gedrosselte Strömung zwischen dem Seitenleitwerk und der Stabilisierungsfläche zu vermeiden.

2. Verfahren nach Anspruch 1, wobei die Reflexion um ein umgekehrtes V-Leitwerk erfolgt.

3. Verfahren nach Anspruch 1, das ferner das Ermitteln des "taillierten" Bereichs für das Seitenleitwerk am Übergang eines Strake beinhaltet.

4. Verfahren nach Anspruch 3, das ferner das Konfigurierten des Strake mit einem "taillierten" Bereich beinhaltet.

5. Verfahren nach Anspruch 1, das ferner Folgendes beinhaltet:

Ermitteln einer ersten optimalen Konfiguration für den "taillierten" Bereich des Seitenleitwerks und den Flugzeugrumpf bei einer ersten Mach-Zahl;
Ermitteln einer zweiten optimalen Konfiguration für den "taillierten" Bereich des Seitenleitwerks und den Flugzeugrumpf bei einer zweiten Mach-Zahl;
Gewichten der ersten und der zweiten optimalen Konfiguration mit Gewichtungsfaktoren, um gewichtete Konfigurationen zu bilden; und
Mitteln der gewichteten Konfigurationen, um eine Endkonfiguration zu ermitteln.

6. Verfahren nach Anspruch 5, das ferner Folgendes beinhaltet:

Ermitteln von Gewichtungsfaktoren für die erste und die zweite optimale Konfiguration auf der Basis eines erwarteten Prozentanteils der Flugzeit des Luftfahrzeugs bei jeder Mach-Zahl bei typischen Flugprofilen.

7. Verfahren nach Anspruch 5, das ferner Folgendes beinhaltet:

Ermitteln von Gewichtungsfaktoren für die erste und die zweite Mach-Zahl auf der Basis von wenigstens einem Mitglied der Gruppe bestehend aus minimiertem Widerstand und minimierter Überschallknallstörung.

8. Verfahren nach Anspruch 1, das ferner das Minimierten der Dicke des Seitenleitwerks vorbehaltlich einer Beschränkung eines Mindestschließwinkels an der Hinterkante des Seitenleitwerks beinhaltet.

9. Verfahren nach Anspruch 1, das ferner das Optimieren der Querschnittsflächenverteilung entlang Mach-Winkellinien beinhaltet.

10. Verfahren nach Anspruch 8, das ferner das Ermitteln von Gewichtungskoeffizienten für Konstruktionsvariablen beinhaltet, um Dickenbeschränkungen für das Seitenleitwerk einzuhalten.

11. Verfahren nach Anspruch 10, das ferner das Ermitteln von Gewichtungskoeffizienten für Ableitungen der n-ten Ordnung mit Orthogonalfunktionen beinhaltet, um Dickenbeschränkungen darzustellen.

12. Verfahren nach Anspruch 5, wobei die Reflexion um ein umgekehrtes V-Leitwerk erfolgt, wobei das Verfahren ferner das Ermitteln von Gewichtungsfaktoren auf der Basis des Vermeidens von gedrosselten Strömungsbedinungungen zwischen dem Seitenleitwerk und der Stabilisierungsfläche beinhaltet.

**Revendications**

1. Procédé pour incorporer des surfaces régies par la loi des aires de couple dans une conception d'avion supersonique, le procédé comprenant :

la configuration du plan fixe vertical avec une zone « en taille de guêpe » pour optimiser la distribution de section de l'avion à proximité du plan fixe vertical pour une performance à faible résistance ; et la réflexion d'une image virtuelle du plan fixe vertical autour d'un empennage papillon ou d'un empennage en T inversé accouplé au plan fixe vertical pour simuler une condition de limite de symétrie, dans laquelle un degré de liberté est retiré du champ de propagation pour éviter un écoulement de tuyère supersonique amorcée entre le plan fixe vertical et la surface de stabilisation lors de la détermination de la configuration de la zone en taille de guêpe du plan fixe vertical.

**2.** Procédé selon la revendication 1, dans lequel la réflexion est autour d'un empennage papillon inversé.

**3.** Procédé selon la revendication 1, comprenant en outre :

la détermination de la zone « en taille de guêpe » pour le plan fixe vertical à la jointure d'un liston.

**4.** Procédé selon la revendication 3, comprenant en outre :

la configuration du liston avec une zone « en taille de guêpe ».

**5.** Procédé selon la revendication 1, comprenant en outre :

la détermination d'une première configuration optimale pour la zone « en taille de guêpe » du plan fixe vertical et le fuselage d'avion à un premier nombre de Mach ;
la détermination d'une seconde configuration optimale pour la zone « en taille de guêpe » du plan fixe vertical et le fuselage d'avion à un second nombre de Mach ;
pondérer les première et seconde configurations optimales avec des facteurs de pondération pour former des configurations pondérées ; et
faire la moyenne des configurations pondérées pour déterminer une configuration finale.

**6.** Procédé selon la revendication 5, comprenant en outre :

la détermination des facteurs de pondération pour les première et seconde configurations optimales en fonction d'un pourcentage de temps pendant lequel on s'attend à ce que l'avion vole à chaque nombre de Mach au cours de profils de vol typiques.

**7.** Procédé selon la revendication 5, comprenant en outre :

la détermination des facteurs de pondération pour les premier et second nombres de Mach en fonction d'au moins un élément du groupe constitué de : la résistance minimale et la gêne de bang sonique minimisée.

**8.** Procédé selon la revendication 1, comprenant en outre :

la minimisation de l'épaisseur du plan fixe vertical soumis à une contrainte d'angle de fermeture minimal au bord de fuite du plan fixe vertical.

**9.** Procédé selon la revendication 1, comprenant en outre :

l'optimisation de la distribution de section le long des lignes d'angle de Mach.

**10.** Procédé selon la revendication 8, comprenant en outre :

la détermination de coefficients de pondération pour des variables de conception afin de maintenir des contraintes d'épaisseur pour le plan fixe vertical.

**11.** Procédé selon la revendication 10, comprenant en outre :

la détermination des coefficients de pondération pour des dérivées du n-ième ordre en utilisant des fonctions orthogonales pour représenter des contraintes d'épaisseur respectives.

**12.** Procédé selon la revendication 5, dans lequel la réflexion est autour d'un empennage papillon inversé, le procédé comprenant en outre :

la détermination des facteurs de pondération qui se basent sur le fait d'éviter des conditions d'écoulement de tuyère supersonique amorcée entre le plan fixe vertical et la surface de stabilisation.

FIG. 1A

## Techniques for Mach Weighted Drag Area Ruling

```
┌─────────────────────────────┐
│   Determine Design Variables │
│            and               │─── 102
│   Initial Area Distribution  │
└─────────────────────────────┘
               │
               ▼
┌─────────────────────────────┐
│ Determine Optimum Configurations │
│   for Multiple Mach Numbers  │─── 104
│   Based on 2nd Derivatives of │
│    Cross-Sectional Area      │
└─────────────────────────────┘
               │
               ▼
┌─────────────────────────────┐
│      Apply Weight to Each    │
│ Configuration at Mach Numbers │─── 106
│   and Determine Average For  │
│    Weighted Configurations   │
└─────────────────────────────┘
               │
               ▼
┌─────────────────────────────┐
│  Smooth Second Derivative of │
│      Cross-Sectional Area    │─── 108
│      of the Mach-weighted    │
│     Average Configuration    │
└─────────────────────────────┘
               │
               ▼
┌─────────────────────────────┐
│  Integrate Second Derivative of │
│   Corss-Sectional Area (twice) │─── 110
│ To Determine Final Cross-Sectional │
│       Area Distribution      │
└─────────────────────────────┘
```

*FIG. 1B*

FIG. 2A

FIG. 2B

14

FIG. 2C

EP 1 694 560 B1

FIG. 3A

FIG. 3B

FIG. 3C

FIG. 3D

FIG. 3F

FIG. 3E

FIG. 3G

EP 1 694 560 B1

FIG. 4

EP 1 694 560 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0246038 A